# EUROPEAN PATENT SPECIFICATION

(11) **EP 2 154 953 B1**
(45) Date of publication and mention of the grant of the patent: **06.01.2016**
(21) Application number: 08751459.2
(22) Date of filing: 02.06.2008
(51) Int. Cl.: A01K 79/02, A01K 75/02

(54) **Use of light for guiding aquatic animals**
Verwendung von Licht zum Führen von Wassertieren
Utilisation de lumière pour guider des animaux aquatiques

(30) Priority: 01.06.2007 IS 8649
(43) Date of publication of application: 24.02.2010
(73) Proprietor: Nyskopunarmidstod Islands, 112 Reykjavik (IS); Hafrannsoknarstofnun, 121 Reykjavik (IS); Hradfrystihusid Gunnvor HF, 410 Hnífsdal (IS); Fjardarnet EHF, 740 Neskaupsstadur (IS)
(72) Inventor: HREINSSON, Einar, IS-400 Isafjordur (IS); GUDMUNDSSON, Geir, IS-101 Reykjavik (IS); JONSDOTTIR, Halla, IS-225 Alftanes (IS)
(74) Representative: Arnason Faktor
(86) International application number: PCT/IS2008/000013
(87) International publication number: WO 2008/146310

(56) References cited:
- WO-A-98/03061
- WO-A-02/089568
- US-A- 1 138 541
- US-A- 1 138 542
- US-A- 4 501 084
- US-B1- 6 203 170

## Description

### Field of the invention

The present invention relates to using light to herd and/or guide aquatic animals into an enclosure, which can be a fishing device, such as net or traps.

### Background of the invention

Technology has been applied to improve the efficiency of fishing devices for decades. This includes technology for fish detection, vessel positioning and monitoring of fishing gear. Traditional fishing gears are under constant development for more efficient catching. Improvements include twine design, more complex and larger net systems as well as the use of modified accessory devices.

The use of a laser source to create a coherent light beam or laser light is a well known technology. A laser light is emitted in a narrow beam and laser lights with different wavelength can be useful in different applications, such as consumer electronics, science, and medicine and information technology.

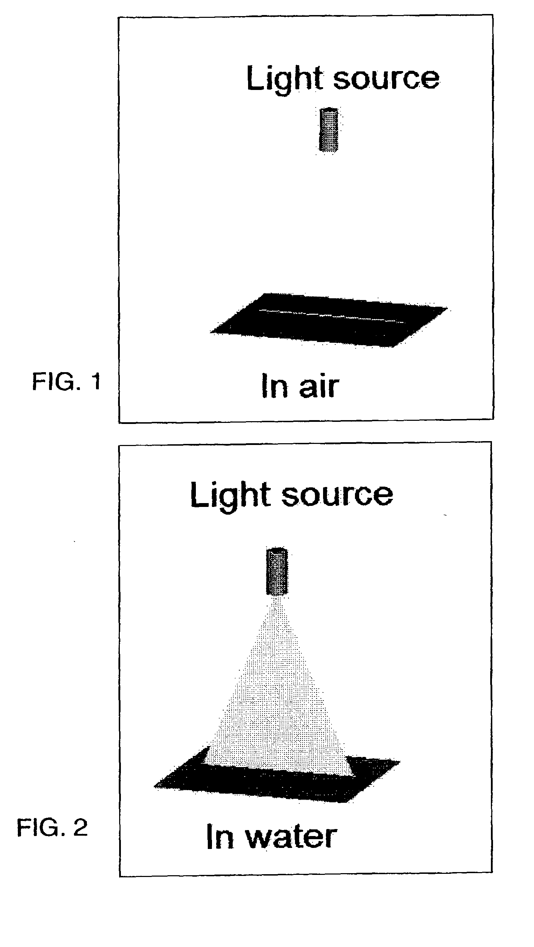

The use of lenses to transfer lights into narrow beams so-called rays to create spotlight is a known technology. There are many special rays that are presently used in optics. By using lenses, light rays can be shaped into various forms such as lines, planes etc. Fig. 1 is an example of a lens which forms the laser light beam into a line on a plane. The length of the line is depending on the lens design (beam angle) and the distance between the light source and the plane. In water (sea) such a light is scattered by suspended particles in the water and the light becomes visible as a triangular plane extending from the light source (see Fig. 2). It is also possible to create such a light wall of various shapes by using mirrors moving at higher frequency than the eye of animals can detect.

With modern laser scanning systems it is possible to use computers to create any form or pattern that one wishes to use, send it to the laser scanning device which draws the selected track or pattern in real time with the laser and display's it where needed. The patterns can vary with time and in fact be a continuous cartoon movie.

The increasing demand of protecting the environment is one of the present driving forces of in the developing of our industries and an aspect of this is the demand for reduced fuel consumption. There has been little development in the field of most fishing gear used today and the demand for increased effectivity has been met by increasing the size of the fishing gear and increased the engine power of the fishing vessels pulling the fishing gear. It is safe to say that current methods of fishing, such as bottom trawl, also do a lot of damage to of the sea-bottom and the effort of pulling the bottom drawl demands high fuel consumption of fishing vessels. Additionally, current methods provide very few possibilities for selecting the catch during fishing. There is therefore a growing demand for the development of improved and more gentile fishing device, which are less energy consuming per caught kilo of fish. Furthermore there is also a need for fishing gear for more selective catching.

Document US 1 138 541 A discloses a fishing device according to the preamble of independent claim 1.

### Summary of the invention

The present invention relates to fishing methods where a light source is used to herd and direct fish and other aquatic animals into enclosure. Light source, attached to a fishing device, is used to project light in waters forming visible shapes in the scattering of the light through the waters. The light source can be remotely controlled based on the movement or the location of the animal. The animals react to the scattered light as a physical barrier or an animal and can be directed or lured into the enclosure. The lights operate together with the device, therefore the lights of the device can extend outwardly in the operating direction of the trap , behind the trap or on one or both sides of the trap, but also downwards to the bottom of the sea (below the trap or above the trap. The type of light is selected based on the prey, which means that the wavelength(s) of light is selected based on which type of light the aquatic animal responds to, i.e. the prey sees the wavelength(s) of light selected as a hindrance and therefore avoids the light.

In a first aspect of the present invention a device is provided for guiding or herding aquatic animals, according to claim 1.

In a second aspect of the present invention a method is provided for guiding aquatic animals, according to claim 9.

### Description of the invention

In the present context the term "Channel" is a course: The channel consists of one or more restraint forming a path into which aquatic animals may be directed. The channel can be straight or bended. The ends of the channel can be enclosed or open and the bottom and the top can be open or with a restraint. The restraint does not prevent fish from going into a direction but it causes an illusive barrier in that direction.

In the present context the term "light source" refers to an electromagnetic radiation that affects aquatic animals. The light source can be; constant or flashing, stationary or moving (vibrating), coherent or a narrow beam. The light source can generate a grid, a net, a picture in one dimension or more dimensions, a so-called hologram. The light source can be anywhere in the electromagnetic spectrum (EM) from infrared (IR), through the visible spectrum to ultraviolet (UV). The light source can further be used in combination with lenses to alter the properties of the light.

In the present context the term "guiding" refers to directing the movement or migration of marine species or herding the marine species in a specific direction or towards a predetermined location.

In the present context the terms "enclosure" or "constrainer portion" refers to any construction, device or gear to enclose, hold or remove aquatic animals from the water, such as, but not limited to a unit that fish can be collected into (fishing gear) such as a trawl, a net, a trap, a cage, submersible cage, a ship or a suitable landscape. This further includes any netting and cage devices used for catching aquatic animals with or without using bait or lure.

In the present context the term "movable unit" refers to a fishing gear comprising a light source and a constrainer portion which is functional when it is moved through a body of water/sea. An example of such a movable fishing gear is a trawl or any other netting devices used for catching aquatic animals as it is moved through a body of water/sea

In an embodiment of the present invention the light source is of a wavelength that is in visible spectrum ranging from violet through blue, light-blue, green, yellow to red. The light forms a scattering effect in the sea/water and/or reflected from the bottom of the ocean/ lake. It is advantageous to project the light to the bottom of the ocean as it will make the bottom-dwelling aquatic animals move away from the light up towards the fishing gear and therefore the fishing gear does not need to be towed in such a manner that it touches the bottom during towing. This will allow fishing over coral reefs without disturbing the structure of the reefs. Furthermore, it allows catching bottom-dwelling species in rough bottom areas without damaging the fishing gear. The scattering effect is generated by small particles in the water. In the present context the light source can be of different frequency, colour (wavelength), strength, the light can be constant or blinking. The light source is further electrically connected a power source and the position and operation (the frequency and strength of on/off) of the light source is manually or remotely adjustable. The light source can also be supported and operated by a sub-marine vessel or vessels. Different species react differently to different wavelength of light. Therefore the wavelength of light selected each time is a wavelength which the species to be caught will observe as a hindrance.

In an embodiment of the present invention a submersible watercraft, such as a submarine or several submarines may be additionally used to guide the herd by attaching an additional light source to the submarine. By operating the light source separately from the constrainer portion it is possible to direct the light source in a different direction than the direction of which the catching device is being operated (pulled). The light source can be directed in front and/or to the sides of the constrainer portion as well as behind and/or downwardly from the constrainer portion. A submarine vessel, with attached light source, can be operated with a fishing device such as a trawl to guide fish into the trawl.

The distance between the submarine vessel(s) and the trawl can be regulated with sensors such that the distance between the submarine vessel(s) and the trawl is controlled. The submarine vessel(s) may also be physically attached to the trawl through cables or any other attaching means.

In an embodiment of the present invention the device is of any construction, device or gear to enclose, hold or remove aquatic animals from the water. The device may comprise a net construction which operates by being moved through water or an ocean.

In a specific embodiment of the present invention a channel is generated by a light pattern in water, restricting movement across/through the pattern, by affecting the behavior of the aquatic animals.

In an embodiment of the present invention the device is a fishing device comprising a frame and a net, which is attached to the frame. A light source is mounted on the frame and the frame forms an opening into a fishing gear. The light beams are directed towards the field of operation to herd and guide aquatic animals into the net bag of the fishing device. Furthermore, the light source is directed outwardly from the frame to form a circular or elliptical cone of light beams.

In an embodiment of the present invention the device is used for selective fishing, where the use of light source is determined based on the type of fish to be caught. This can be obtained in numerous ways by specifically selecting the wavelength of the light and using various types of lenses. In this manner continuous light walls or light patterns with gaps in the light pattern can be used to herd the aquatic/sort desired aquatic animals. To obtain such selective fishing is also based on how the light source is attached to the fishing gear and or submarine vessel(s).

In an embodiment of the present invention the fishing device is constructed in such a manner that the frame forms an opening of said fishing device and the net is attached to the rear part of said frame. The light source is mounted to the front part of the frame such that the aperture is directed forward with respect to the frame.

In a specific embodiment of the present invention the fishing device is a trawl further comprising a belly portion and a codend portion. In such an embodiment the frame portion connects the belly portion and the light source.

In an embodiment of the present invention the light is used to selectively guide certain species into fishing nets, while other species will not respond to the light and are therefore less likely to be caught in the net. Different aquatic species react differently to light of different wave length. This can be useful with respect to the technology of the present invention. If a vessel is primarily after one species of fish, such as cod, the wave length of the light source is selected as a wave length more selective for cod than other species present.

In an embodiment of the present invention the fishing device of the present invention can also be used for catching fish near or at the bottom of the ocean, without physical impact on the sea bed. The light source will project a beam or an array of beams along the bottom of the ocean to herd fish off the bottom and into a fishing device.

In an embodiment of the present invention the light source is coherent light source, such as a laser light source. The laser light can be of any wavelength from the UV spectrum through the visible spectrum and to the infra red spectrum. The light source can also project narrow beam light of other class than laser. Lenses can be used in combination with the light source to project the light in different shapes or forms.

In a specific embodiment the laser light is in the blue/red/green portion of the visible spectrum. The light source is electrically connected to a power source, which can be located on the fishing vessel or on the fishing device itself. The light source can include a plurality of laser-or spotlight devices arranged on the frame to form a circular or elliptical cone of light beams. The laser-or spotlight devices can be mounted on the frame in such a manner so that they are adjustable in order to widen or narrowing the angle of the cone of light beams. With a moveable mirror inside or outside of the laser-or spotlight device, the direction of the laser-spotlight beam can be changed to widen or narrowing the angle of the cone of light beams. The position of the light sources is therefore either manually or remotely adjustable on the frame portion. With a remotely controllable moveable mirror, the laser- or spotlight beam can be moved back and forth at high frequency to simulate a vibrating light beam. The vibrating light beam is seen as a hindrance for the fish and the fish therefore swims away from the beam and is herded or guided in by the hindrance.

In an embodiment of the present invention a method is provided for guiding fish into a fishing device of the invention. The method comprises the steps of attaching a light source to a frame forming an opening into a net and directing the light source in the field of operation of the fishing device. The light strobes creating visual effects thereby guides aquatic animals towards the net and into the net as the fishing device moves through the field of operation.

In an embodiment of the present invention a method is provided for guiding/herding marine fauna into a restraining device. The method comprises the steps of operating a fishing gear trough a field of operation and directing a light source in the field of operation of the fishing gear. The method is characterized in that the light source guides/herds aquatic animals towards and into the constraining device. The light source can be remotely adjustable and the restraining device is a fishing gear operated through the field of operation by towing or drifting.

In an embodiment of the present invention the light source is a spotlight which can give narrow light-beam. By using normal light source and collimating lenses it is possible to make narrow parallel light beam which have similar or the same effect as laser-light, as the light beam will be visible in seawater due to scattering effect just as lasers light does.

The light source of the present invention is attached to the fishing gear and based on a frame connected to the fishing gear, such as a net/trawl. An additional light source can also be operated separately from the fishing gear by attaching said light source to a sub-marine vessel, which is remotely operated. The light source can be positioned on the fishing gear and/or the submarine vessel.

In an embodiment of the present invention the method includes moving the net through the field of operation, such as an ocean or fresh water, by towing or drifting. In an advanced system the vessel travels on an ocean or "fresh" water and monitors migration of a cluster of fish (shoal) by sonar technology. The vessel is towing a net system such as a trawl with an oval or circular frame holding the trawl belly open. The frame has mounted on it an array of laser-or spotlights forming a cone of light beams at a certain angle. As the fish will avoid the light wall, formed by the light beams from the laser-or spotlights, the fish will swim away from the spotlight and eventually get caught in the trawl belly and the codend. As the direction of the light source is adjustable from a control device, the inclination angle of the light beam can be adjusted to fit different herding speeds and swimming speeds of targeted species.

In an embodiment of the present invention a laser line generator lenses can be used in front of each laser-beam to make a visible light-wall in the water. This would be beneficial to point a laser-wall to the sea bottom to create a visible line on the bottom and a light wall from the line up to the frame to let fish lift it self from the bottom. This wall can have an angle to let fish gather in a corner.

In an embodiment of the present invention the device has the herding properties of traditional trawls, wherein less netting structure is required and thus the fishing device creates less resistance during towing, which further results in less energy consumption of the fishing vessel.

In an embodiment of the present invention the device projects the light source to the bottom of the ocean/lake to guide/herd bottom-dwelling species upwardly from the bottom and into the towing direction of the trawl.

In an embodiment of the present invention the type of light source is determined based on which species of fish is to be caught. Different sources of light (type of light) defined by the frequency of the light are used based on the desired species of fish as the different species react differently to different type of light. In this manner selective fishing can be conducted by using one type of light which as some species are drawn to certain type of light while other species are repelled by light of same frequency.

In an embodiment of the present invention the device is towed on an umbilical, which is a combined towing cable and a communication cable transferring electrical power, telemetry and data for instruments/devices attached to the fishing gear. The frame is connected to the net and the light sources are positioned on the frame. An array of optional means can be attached to the device (such as the frame of the device) to have better control over the device and to regulate the catching. A steering device can be attached to the device for adjusting the vertical position of the gear and for regulating the distance of the device from the bottom of the ocean. Floatation devices can also be attached to the frame. A camera can further be attached to the device to be used in an interactive manner with the controller of the ship/fishing device. Sensors can also be attached to the device detect the distance from the bottom of the ocean or other obstacles. The information from the sensor can be communicated to the controller of the ship/fishing device through the communication cable and an acoustic distance sensor constantly measure the distance between the gear and the sea bottom, feeding the control system for automatic vertical position holding. Optional sensors and devices which can be connected to the umbilical are for example: Cameras, lights, catch sensors, temperature meters, current meters, sonar, hydrophones, mechanism for opening and closing of the main net body, sensors and mechanism for sorting fish species and fish species sizes.

Three or more laser beams can be used together with a laser line generator lens to create a closed pattern on the seabed. If such a set-up is lowered over a school of fish and the light turned on, the school can be kept within the body of water defined by the laser line on the seabed and the laser beams. By changing the size/circumference of the pattern on the seabed, either by changing the angle of the laser beams or lowering the equipment, the school of fish can be made denser.

By slowly moving the equipment horizontally, the school can be moved and herded into a closure. Small schools of fish can also be herded into a large school, using many; coordinated laser beams, and kept there until captured.

Instead of using many lasers and laser-lines on the sea bottom to generate the close pattern, it is also possible to use a powerful laser and laser scanning system.
A circle of laser light can be made with one laser and a laser scanning system. Such a device operates in a similar manner as described above, except that instead of many instruments generating laser beams, only one powerful laser beam is used to create a circle or pattern. The simplest version would be a laser beam pointed at a mirror rotating at a frequency more than 15 Hz. The laser beam forms a circle on the seabed at such a speed that fish perceive it as a continuous circle. Because of scattering of light from the beam, a conical light-wall is created from the generator to the seabed.

By having the angle of the mirror adjustable, so the angle can be changed continuously and slowly, the cone and circle can be narrowed without having to lower the equipment towards the seabed.

Transport of fish from one spot to another in the wild or in fish farming is based on the same concept that is that the fish avoids the light in question. Thus it is possible to generate a light beam, blinking or vibrating light beam or a light wall and as fish avoids the light in question fish is made to swim up, down to the side or in a certain direction. This is of use to herd fish in nature, in fish tanks, inside net pens or between two or more of the above mentioned sites. The light source can be freely moving or attached to the above mentioned structures.

In a specific embodiment of the present invention the light source can be used to produce a hologram in the waters. The hologram can represent an animal or an object which the prey is either drawn to or will avoid.

In the present context aquatic animals are herded with a light source operating with a closure. The light source and resulting lights are moved with floating or submersed watercrafts or with drift water and ocean tides. The movement of light can be pushed, pulled, drifting or self propelled.

In the present context the light source is in the visible spectrum of the aquatic animals in question. The concept of herding aquatic animals with one or more light sources can be implemented in various ways; some of these are explained in the following text.

In an embodiment of the present invention the light devices are connected to a vessel/ship by an electrical cable or connected to a submarine attached to or integrated into a towing cable; the light device can be remotely controlled. There are also conductors for a data network so it is possible to communicate with each individual light-device from the ship, particularly to turn each individual light-wall on and off, change colour of the light, let it blink at different frequency or change the angel between the light walls. Batteries can also be used to power the lasers and it is further possible to pre-program a small computer controller to turn on and off the light according to some predefine scheme. Furthermore the electrical cable can be an umbilical for additional power and data transfer for remotely control of the fishing device itself and/or interactive control of accessories and/or auxiliary devices.

In the present context floating or submersed watercrafts operating with light beams are used to herd fish. The watercrafts can tow light trawls or tow or push light plows and light beams and walls the watercraft can operate individually or in groups to herd fish. The watercraft can use artificial intelligence to round up and herd fish by moving the watercraft and or the lights in the water body.

### Detailed description of the invention

Illustrative embodiments the invention will be described more in detail with reference to the drawings and the examples given below.

### List of drawings

Fig. 1 refers to prior art technology where a lens forms a laser light beam into a line on a surface.
Fig. 2 refers to prior art technology where a lens forms a laser light beam and the light is scattered by suspended particles in the water and the light becomes visible as a triangular plane extending from the light source.
Fig. 3 shows a side view of a fishing vessel towing a light beam trawl according to the method of the present invention.
Fig. 4 shows how the light beams guide the fish to the center of the cone created by the light beams.
Fig. 5 discloses a fishing device according to a specific embodiment of the present invention.
Fig. 6 shows the device in field operation.
Fig. 7 shows a side view of a fish cage/pen where a light wall which does not form part of the invention is used to move fish up or
down in a pen.
Fig. 8 shows a perspective view of a fish cage in which a light wall which does not form part of the invention is used to move fish
from one side of the cage to another side of the cage.
Fig. 9 shows an embodiment of herding fish towards and into traps, but not according to the invention.
Fig. 10 shows an advanced device being towed on an umbilical cable.
Fig. 11 shows an embodiment with a submarine vessel for herding the fish towards the trawl.
Fig. 12 shows the effects of light source using an underwater video camera in actual fishing grounds.

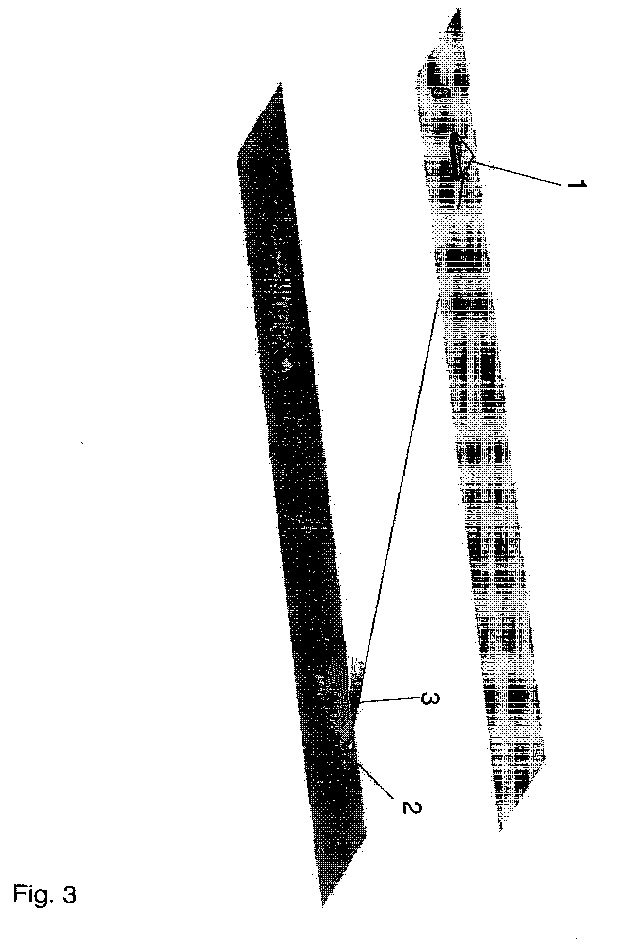

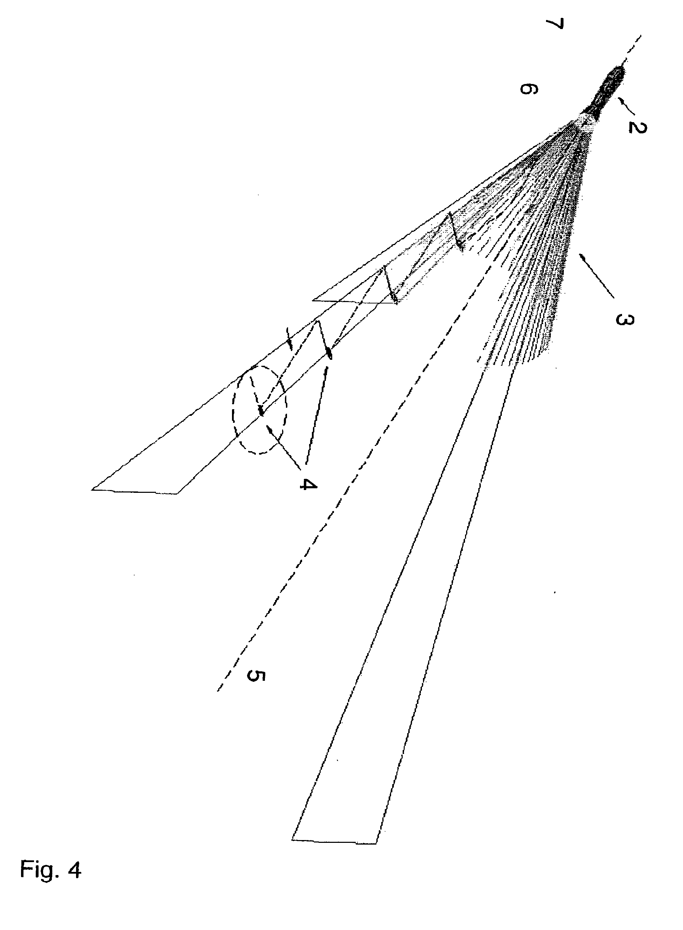

The general concept of the present invention is shown in Figs. 3 and 4. Fig. 3 shows a perspective view of a fishing vessel 1 towing a light beam trawl 2. The laser beams 3 extend outwardly from the trawl 2 forming an extension of the fishing device. Fig. 4 shows a trawl being towed through water attached to a vessel (not shown) by a towing wire 5. Light source devices are arranged around the mouth of the trawl and the light beams 3 form a wall of beams creating a cone extending outwardly from the trawl mouth. When the fish 4 swim towards the light beams they will react and change direction into the centre of the cone created by the light beams 3. The fish 4 will then I be guided through the belly 6 and eventually caught in the codend 7 of the trawl.

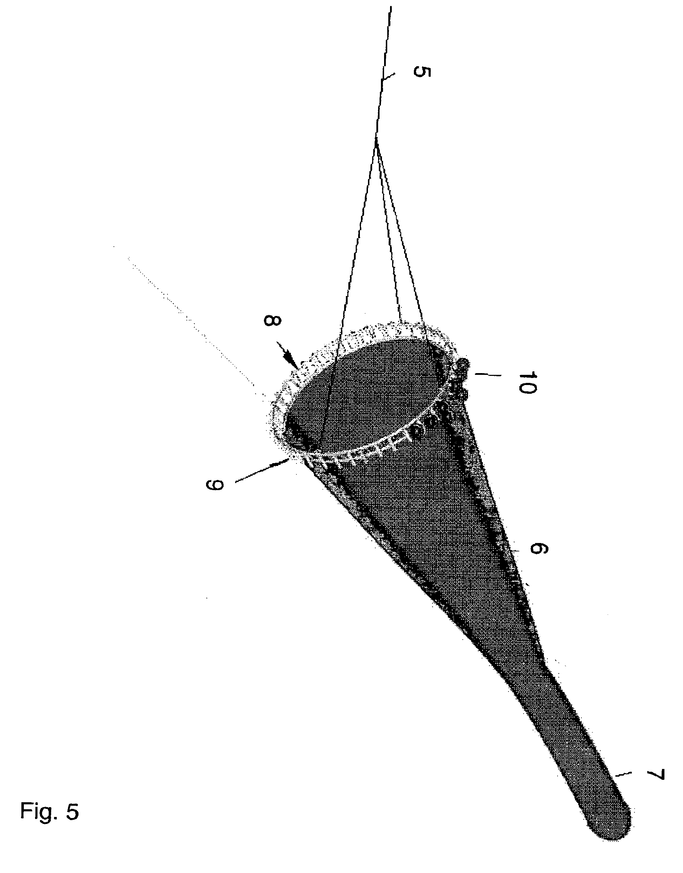

Fig. 5 discloses a fishing device according the present invention. The trawl shown in the drawing comprises a belly 6 and codend 7 made of netting. The circular frame 8 connects the net and the light source, comprising a plurality of laser spotlight devices 9 attached to the circular frame 8 and distributed so that the laser-light beams 3 form a circular or elliptical cone from the frame. The laser spotlight devices 9 are connected to a vessel/ship (not shown) by an electrical cable attached to or integrated into a towing cable which splits into two or more separate towing bridles to keep the device in a desired geometrical position. The laser devices are powered by electricity from a vessel via electrical cable. The electrical cable from the vessel to the frame is lead along the warps/towing cables 5 and fixed to it. The electrical cable is then either split into several shorter cables, each connected to a laser device 9 or the cable has several take-outs and the laser devices are serial connected. Inside the electrical cable are also conductors for a data network so it is possible to communicate with each individual laser-device from the vessel, particularly to turn each individual laser-beam on and off, change color of the light, or let it blink at different frequency. The light aperture can also be directed backwards from hydrodynamic wings. Floatation devices 10 can be arranged on the frame to assist with the control of the fishing device.

Batteries can also be used to power the lasers and it is further possible to preprogram a small computer controller to turn on and off the light according to some predefined scheme. Furthermore the electrical cable can be an umbilical for additional power and data transfer for remotely control of the fishing device itself and/or interactive control of accessories and/or auxiliary devices.

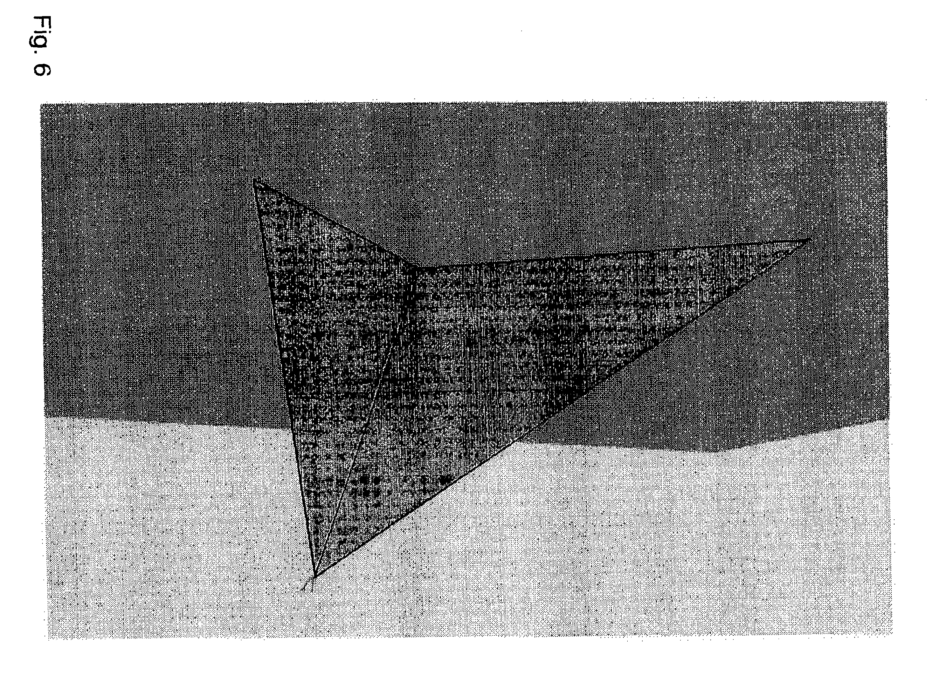

Figure 6 shows a side view of a fishing light beam fishing device, dragging the seabed with light. The fish are guided to the center of the light plough created by the light beams, which does not form part of the present invention, and the fish will eventually be guided into an enclosure of interest. The angle between the light walls can be remotely adjusted for each light source for optimal shape of the light fishing device. The length of the wall and its distance from sea bottom is adjustable.

Lights are used to transport fish. The transport of fish is based on the same concept as the light trawl and the plough that is fish avoiding light. With a light beam or beams a light wall is formed and used to repel fish in a given direction. The fish avoids the light and can thus be herded in a given direction.

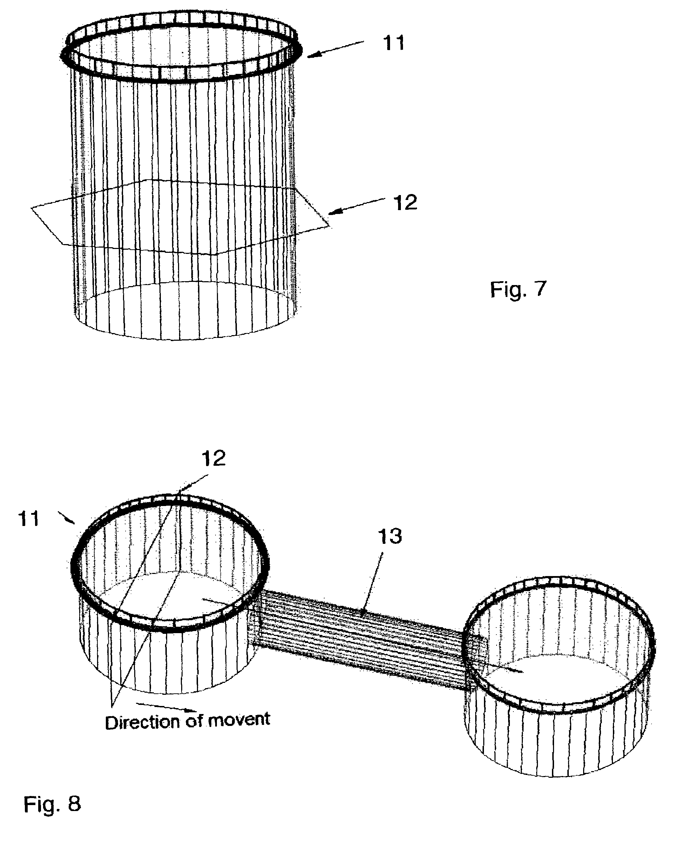

Fig. 7 shows a side view of a fish cage/pen 11 where a light wall 12, which does not form part of the invention, is used to move fish up or down in a pen. A light plane is created forming a separating plane through the pen. When the plane is moved upwards the fish will swim upwardly to the surface of the water. This can be used to herd the fish into higher density in the upper part of the pen. This is beneficial for sorting as well as for removing fish from a pen.

Fig. 8 demonstrates how fish can be transported from one cage 11 to a second cage 12. A fish cage is shown, where a light wall 12, which does not form part of the invention, is used to move fish from one side of the cage to another side of the same cage. An opening in the side of each cage is connected by laser beams forming a tunnel 13 between the two cages. The fish will then be guided into another cage. The laser light in the first cage is moved transversal in order to herd the fish from one cage into the other through the laser light tunnel. The laser is in a capsule and the capsule is connected to a motor that moves the laser along a rail so that the laser capsule. The lasers light are transported to form a channel to move fish along. The laser can be powered by batteries or by an electrical cable. The rail can either be straight or flexible.

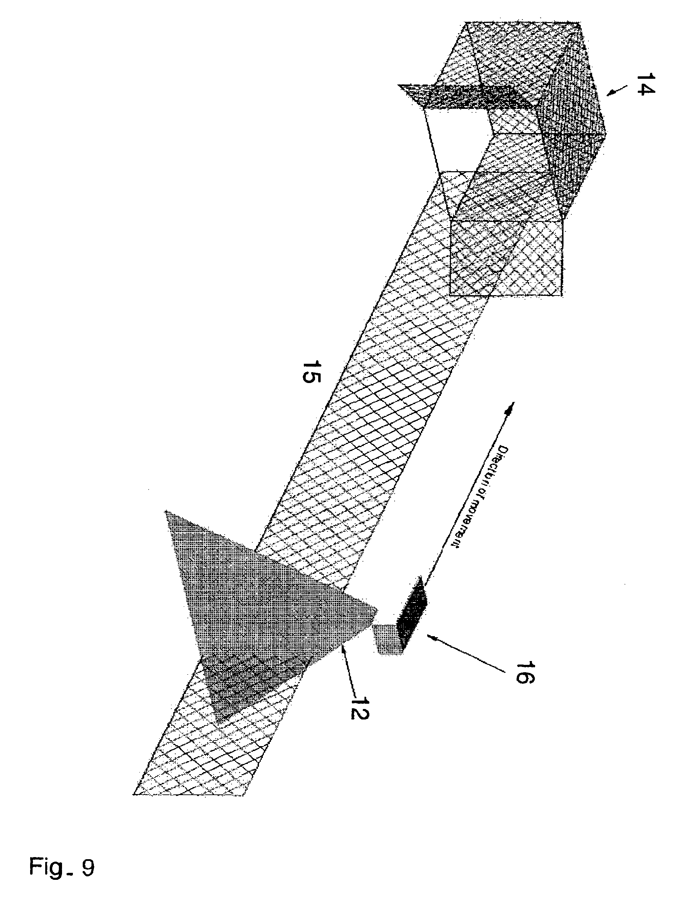

Fig. 9 demonstrates how fish can be herded into traps. By using a laser light generator it is possible to create a light wall 12, which does not form part of the invention, in fresh- or seawater and thereby affect the behaviour of fish or other aquatic animals. The light wall acts as a physical barrier and restricts the movements of the animals. By using this laser technique in relation with a trap 14, it is possible to increase the efficiency of the traps 14. The main features of traditional traps 14 are the trap itself (or some kind of container) and a leader (Fig. 9). The leader is a panel of net 15 that is raised (vertically) on the bottom from the trap itself and can be of various lengths. Many animals, fish included, have the tendency to travel alongside a physical barrier of any kind that happens to be on their way as they travel in their habitat. The leader has therefore the purpose of leading the animal into the trap. It is possible to use a remotely operated vehicle comprising a laser light source 16 instead of the leader, either a laser light generator or a few narrow beam lasers. This may be done to get rid of the effort of setting the leader. The light source is placed over the leader between the openings of the trap so animals can go into it from both sides of the light barrier (Fig. 9).

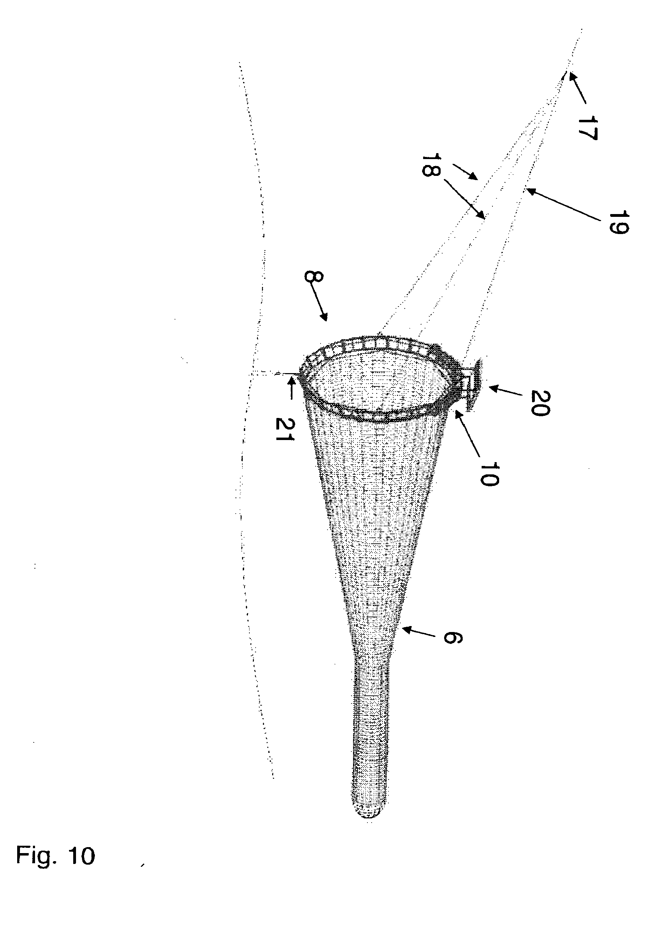

Figure 10 shows an advanced device according to an embodiment of the present invention, having the same fundamental elements as the device shown in fig. 5. The figure shows a the device of the present invention being towed on an umbilical 17, which is a combined towing cable 18 and a communication cable 19 transferring electrical power, telemetry and data for instruments/devices attached to the fishing gear. The circular frame 8 is connected to the net and the light sources are positioned on the frame. A steering device 20 is shown on top of the device for adjusting the vertical position of the gear, which can regulate the distance of the device from the bottom of the ocean. Floatation devices 10 are also shown on the frame to further assist with the control of the device. A camera is not shown on the device in fig.10, but the camera can be used in an interactive manner with the controller of the ship/fishing device to further regulate the position of the fishing device or detect eventual problems. A sensor 21 is shown at the bottom of the frame. This sensor can detect the distance from the bottom of the ocean. The information from the sensor can be communicated to the controller of the ship/fishing device through the communication cable 19, if a certain distance from the bottom is to be kept or in order to avoid hitting unexpected items or increase at the bottom of the ocean. This height control can also be automated such that the sensor and the steering device and the floatation device are all connected and commonly regulated.

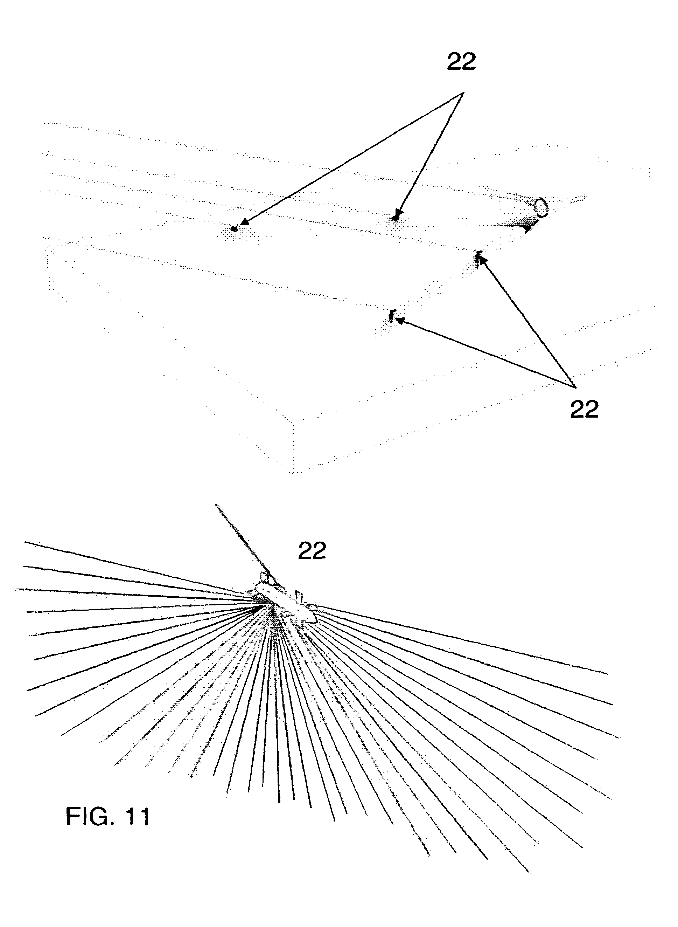

Figure 11 shows an embodiment where submarine vessels 22 are operated together with the trawl to herd the fish towards the trawl. The submarine vessels 22, which can be remote controlled or manned, are equipped with light sources to extend the area of fishing and complements the light sources on the trawl to herd the fish towards the trawl.

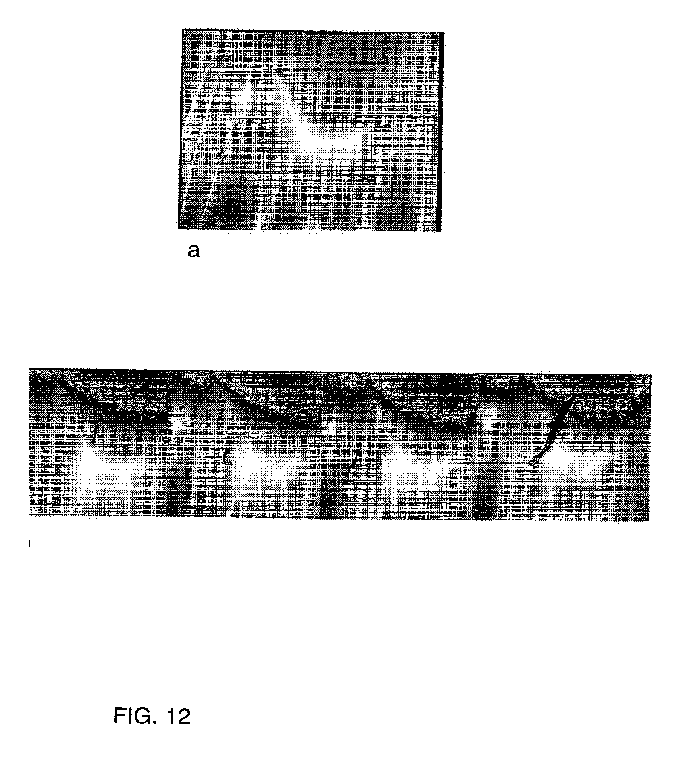

Figure 12 shows the effects of light using an underwater video camera in actual fishing grounds.

The results clearly demonstrate that the light forms clear structures in the water column (see fig 12a). A straight laser beam forms a clear light line simulating visual images of herding ropes and when a straight light beam hits the sea bottom it forms a light point on the bottom. A triangular beam created as disclosed in Fig. 2 forms a straight line on the bottom as it hits the surface of the bottom and when several light-lines were projected on the bottom they simulate the form of a conventional footrope of a trawl (see Fig. 12 a) as the light sources were positioned to form a continuous structure extending from the gear frame in the towing direction. The triangular gaps in figure 12 appeared to have a selective function as such gaps also have in conventional footgear of a bottom trawl. No cod was caught in the trawl and by looking at the video sequence some animals were seen swim away from the light and towards the non-light black area. Therefore, by a combination light (wavelength), lenses (for forming light beams) and other features with the light beams (such as vibration) the method and device of the present invention can be used for selective catching.

In figure 12b the effects on behaviour of fish situated in a body of water are shown. The results were obtained by using an underwater video camera and the figure comprises still-shots from the video sequence.

The results showed (not shown) that haddock and small herring respond to these light beams images in the same way as these species respond to images of conventional herding ropes used in trawling. It was furthermore confirmed that flat angular light beams positioned horizontal, vertical and at different angles have the same herding influences on these species as herding nets used in trawling. Additionally, small herring responded to both the straight light beams and the flat angular formed beams in the same way as it responds to conventional physical herding ropes during pelagic trawling.

The effects light beams were also tested on behaviour of fish situated near sea bottom using an underwater video camera. The results further showed that cod, catfish and haddock swim ahead and thus away from the light points that are formed when a straight light beams hits the sea bottom. It was furthermore confirmed that light lines projected on the sea bottom create the same herding effect on cod, catfish, and haddock as conventional footrope of trawl does create.

Figure 12b shows four picture frames from a video sequence.

On the first picture the haddock appears to become aware of light line hitting the bottom and it swims away from the light (footrope) of the light trawl. In the second picture, the haddock swims upwardly away from the bottom and away from the light wall (side wall) created by the light source. The Haddock continues to swim away from the light-beams (picture 3) upwardly and to the center of the towing field and ends up in the codend of the light trawl (picture 4).

## Claims

1. A fishing device comprising
• a frame,
• a net, which is attached to the frame, and
• a light source is mounted on the frame
**characterised in that** the frame forms an opening into the fishing device and wherein light beams are directed towards the field of operation to herd and guide aquatic animals into the net of the fishing device, and **in that** the light source is directed outwardly from the frame to form a circular or elliptical cone of light beams.

2. The device according to claim 1, wherein the wavelength of the light from the light source is in the UV, visible or the IR spectrum.

3. The device according to any of the preceding claims, wherein light from the light source has a vibration function.

4. The device according to any of the preceding claims, wherein an additional light source is supported and operated by a sub-marine vessel.

5. The device according to any of the preceding claims, wherein the device further comprises a sensing device.

6. The device according to any of the preceding claims, wherein the device further comprises floatation devices.

7. The device according to any of the preceding claims, wherein the device further comprises a camera.

8. The device according to any of the preceding claims, wherein the fishing device is a trawl further comprising a belly portion and a codend portion and wherein the frame portion connects the belly portion and the light source.

9. A method for guiding fish into a fishing device, the method comprising the steps of attaching a light source to a frame forming an opening into a net and directing light beams in the field of operation to herd and guide aquatic animals into the net of the fishing device as the fishing device moves through the field of operation, and wherein the light source is directed outwardly from the frame to form a circular or elliptical cone of light beams.

10. The method according to claim 9, wherein the light source forms a circular or elliptical cone of light beams in a water column and or at the bottom of the water/ocean

11. The method according to claim 9, wherein the light source creates a hologram in the field of operation.

12. The method according to claim 9, wherein the light source creates vibrating beams in the field of operation.

13. The method according to claims 9-12, wherein light forms a scattering effect in the sea/water.

14. The method according to claims 9-13, wherein light is reflected from the bottom of the ocean/lake coral reefs and/or cliffs.

15. The method according to claims 9-14, wherein an additional light source is supported and operated by a sub-marine vessel.

## Patentansprüche

1. Fischfangvorrichtung, die umfasst:
- einen Rahmen,
- ein Netz, das an dem Rahmen befestigt ist, und
- eine Lichtquelle, die an dem Rahmen befestigt ist,
**dadurch gekennzeichnet, dass** der Rahmen in der Fischfangvorrichtung eine Öffnung bildet und wobei Lichtstrahlen in die Richtung des Operationsgebiets gelenkt werden, um Wassertiere in das Netz der Fischfangvorrichtung zusammenzudrängen und zu führen, und dass die Lichtquelle von dem Rahmen nach außen gerichtet ist, um einen kreisförmigen oder elliptischen Kegel von Lichtstrahlen zu bilden.

2. Vorrichtung nach Anspruch 1, wobei die Wellenlänge des Lichts von der Lichtquelle in dem UV-Spektrum, in dem sichtbaren Spektrum oder in dem IR-Spektrum liegt.

3. Vorrichtung nach einem der vorhergehenden Ansprüche, wobei das Licht von der Lichtquelle eine Schwingungsfunktion aufweist.

4. Vorrichtung nach einem der vorhergehenden Ansprüche, wobei eine zusätzliche Lichtquelle von einem Unterwasserschiff getragen und betrieben wird.

5. Vorrichtung nach einem der vorhergehenden Ansprüche, wobei die Vorrichtung ferner einen Fühler umfasst.

6. Vorrichtung nach einem der vorhergehenden Ansprüche, wobei die Vorrichtung ferner Schwimmvorrichtungen umfasst.

7. Vorrichtung nach einem der vorhergehenden Ansprüche, wobei die Vorrichtung ferner eine Kamera umfasst.

8. Vorrichtung nach einem der vorhergehenden Ansprüche, wobei die Fischfangvorrichtung ein Grundschleppnetz ist, das ferner einen Bauchabschnitt und einen verengten Abschnitt umfasst, und wobei der Rahmenabschnitt den Bauchabschnitt und die Lichtquelle verbindet.

9. Verfahren zum Führen von Fischen in eine Fischfangvorrichtung, wobei das Verfahren die Schritte des Befestigens einer Lichtquelle an einem Rahmen, der eine Öffnung in einem Netz bildet, und des Lenkens von Lichtstrahlen in die Richtung des Operationsgebiets umfasst, um Wassertiere in das Netz der Fischfangvorrichtung zusammenzudrängen und zu führen, wenn sich die Fischfangvorrichtung durch das Operationsgebiet bewegt, und wobei die Lichtquelle von dem Rahmen nach außen gerichtet ist, um einen kreisförmigen oder elliptischen Kegel von Lichtstrahlen zu bilden.

10. Verfahren nach Anspruch 9, wobei die Lichtquelle einen kreisförmigen oder elliptischen Kegel von Lichtstrahlen in einer Wassertiefe und/oder auf dem Grund des Wassers/Ozeans bildet.

11. Verfahren nach Anspruch 9, wobei die Lichtquelle in dem Operationsgebiet ein Hologramm erzeugt.

12. Verfahren nach Anspruch 9, wobei die Lichtquelle in dem Operationsgebiet Schwingungsstrahlen erzeugt.

13. Verfahren nach Ansprüchen 9 bis 12, wobei das Licht einen Streueffekt in der See/in dem Wasser erzeugt.

14. Verfahren nach Ansprüchen 9 bis 13, wobei das Licht von dem Grund des Ozeans/des Sees, der Korallenriffe und/oder Klippen reflektiert wird.

15. Verfahren nach Ansprüchen 9 bis 14, wobei eine zusätzliche Lichtquelle von einem Unterwasserschiff getragen und betrieben wird.

## Revendications

1. Dispositif de pêche comprenant
• un cadre,
• un filet, qui est fixé au cadre, et
• une source de lumière, qui est montée sur le cadre
**caractérisé en ce que** le cadre forme une ouverture dans le dispositif de pêche et dans lequel des faisceaux de lumière sont dirigés vers le champ d'opération pour rassembler et guider des animaux aquatiques dans le filet du dispositif de pêche, et **en ce que** la source de lumière est dirigée vers l'extérieur depuis le cadre pour former un cône circulaire ou elliptique de faisceaux de lumière.

2. Dispositif selon la revendication 1, dans lequel la longueur d'onde de la lumière provenant de la source de lumière se situe dans le spectre UV, visible ou IR.

3. Dispositif selon l'une quelconque des revendications précédentes, dans lequel la lumière provenant de la source de lumière a une fonction de vibration.

4. Dispositif selon l'une quelconque des revendications précédentes, dans lequel une source de lumière supplémentaire est portée et manipulée par un vaisseau sous-marin.

5. Dispositif selon l'une quelconque des revendications précédentes, le dispositif comprenant en outre un dispositif de détection.

6. Dispositif selon l'une quelconque des revendications précédentes, le dispositif comprenant en outre des dispositifs de flottaison.

7. Dispositif selon l'une quelconque des revendications précédentes, le dispositif comprenant en outre une caméra.

8. Dispositif selon l'une quelconque des revendications précédentes, le dispositif de pêche étant un chalut comprenant en outre une partie de ventre et une partie de poche et dans lequel la partie de cadre relie la partie de ventre et la source de lumière.

9. Procédé de guidage du poisson dans un dispositif de pêche, le procédé comprenant les étapes consistant à fixer une source de lumière à un cadre formant une ouverture dans un filet et diriger des faisceaux de lumière dans le champ d'opération pour rassembler et guider des animaux aquatiques dans le filet du dispositif de pêche lorsque le dispositif de pêche se déplace à travers le champ d'opération, et dans lequel la source de lumière est dirigée vers l'extérieur depuis le cadre pour former un cône circulaire ou elliptique de faisceaux de lumière.

10. Procédé selon la revendication 9, dans lequel la source de lumière forme un cône circulaire ou elliptique de faisceaux de lumière dans une colonne d'eau et/ou au fond de l'eau/l'océan.

11. Procédé selon la revendication 9, dans lequel la source de lumière crée un hologramme dans le champ d'opération.

12. Procédé selon la revendication 9, dans lequel la source de lumière créée des faisceaux vibrants dans le champ d'opération.

13. Procédé selon les revendications 9 à 12, dans lequel la lumière forme un effet de diffusion dans la mer/l'eau.

14. Procédé selon les revendications 9 à 13, dans lequel la lumière est réfléchie depuis les récifs coralliens et/ou les falaises du fond de l'océan/du lac.

15. Procédé selon les revendications 9 à 14, dans lequel une source de lumière supplémentaire est portée et manipulée par un vaisseau sous-marin.
